# EUROPÄISCHE PATENTSCHRIFT

(11) **EP 2 615 298 B1**
(45) Veröffentlichungstag und Bekanntmachung des Hinweises auf die Patenterteilung: **06.05.2015**
(21) Anmeldenummer: 12197034.7
(22) Anmeldetag: 13.12.2012
(51) Int. Cl.: F03B 3/12

(54) **Wasserkraftschnecke**
Water-power of screw type
Turbine hydraulique de type de vis

(30) Priorität: 13.01.2012 AT 1212 U
(43) Veröffentlichungstag der Anmeldung: 17.07.2013
(73) Patentinhaber: Albrecht, Walter, 3283 St. Anton/Jeßritz (AT)
(72) Erfinder: Albrecht, Walter, 3283 St. Anton/Jeßritz (AT)
(74) Vertreter: Müllner, Martin

(56) Entgegenhaltungen:
- DE-A1- 19 507 149
- DE-U1-202009 009 968
- DE-U1-202010 001 741
- US-A1- 2005 074 322

## Beschreibung

### Technisches Gebiet

Die Erfindung betrifft eine Wasserkraftschnecke mit einer ein- oder mehrgängigen Arbeitsschnecke, welche verbunden mit einem die Arbeitsschnecke umgebenden Mantelrohr zum Halten des Arbeitswassers, drehbar gelagert ist, wobei das Mantelrohr einen Flüssigkeitszulauf und einen tiefer liegenden Flüssigkeitsablauf aufweist.

### Stand der Technik

Wasserkraftschnecken, siehe z.B. US2005/0074322, bestehen im Allgemeinen aus einem schräg abfallenden Rohr oder Trog in welchem eine gewindeartig gewundene Schneckenspirale, welche üblicherweise durch ein entsprechend gebogenes Blechband gebildet ist, verläuft.

Wenn die Schneckenspirale gegenüber dem Rohr oder Trog drehbar ist, ist die Wasserkraftschnecke gleich aufgebaut wie ein üblicher Schneckenförderer. In der Anwendung als Wasserkraftschnecke wird oben Wasser eingefüllt, dieses bewirkt durch seine Schwerkraft ein Drehmoment auf die Schneckenspirale, wodurch sich diese dreht und mit jedem Gewindegang einen kleinen Tümpel Wasser nach unten fördert. Höhenenergie des Wassers wird in Rotationsenergie der Schneckenspirale umgewandelt, welche wiederum einen Generator für die Erzeugung von elektrischer Energie antreiben kann.

Bei der speziellen Form von Wasserschnecken, wie sie beispielsweise in der EP 2369168 A2 offenbart ist, verläuft die Schneckenspirale in einem Rohr und Schneckenspirale und Rohr sind fix miteinander verbunden. Drehung der Spirale bewirkt auch Drehung des gesamten Rohres. (Die Bauweise wird gern in Wasserspielparks angewendet und dient dort dazu Wasser aus einem unten liegenden Teich anzuheben.)

Gemäß dem Patent AT 509209 B1 wird eine zweischalige Bauweise der Wasserkraftschnecke vorgeschlagen, wobei die innere Spirale einen anderen Wickelsinn aufweist als die äußere. Damit kann eine Spirale als Turbine wirken, während die andere Spirale als fischfreundliche Fischleiter wirken kann.

Nachteilig bei bekannten Wasserkraftschnecken ist, dass das untere Lager der Wasserkraftschnecke in einem vom Wasser umgebenen Bereich liegt und dadurch teurer ausgestaltet ist als ein Lager, welches sich im Trockenen befindet. Weiters ist ein unter Wasser liegendes Lager wartungsanfälliger und schwieriger zugänglich.

### Kurzbeschreibung der Erfindung

Es ist somit Aufgabe der vorliegenden Erfindung, eine Wasserkraftschnecke zu schaffen, welche die oben genannten Nachteile des unteren Lagers beseitigt und somit den Wartungsaufwand und die Kosten für die Herstellung und den Betrieb einer Wasserkraftschnecke wesentlich senkt.

Diese Aufgabe wird dadurch gelöst, dass zumindest die tiefer liegende Lagerung der Wasserkraftschnecke durch einen das Mantelrohr von unten umschlingenden Riemen erfolgt, welcher oberhalb des Mantelrohrs eine drehbare Aufhängung von oben her umschlingt, wobei diese Aufhängung gleichzeitig als ein Kraftabtrieb dient. Durch dieses Merkmal wird das Mantelrohr gegen Kräfte nach unten abgestützt und macht ein unteres Lager, wie es im Stand der Technik bekannt ist überflüssig. Das Lager dient gleichzeitig auch als Kraftabtrieb, welcher an der Oberseite der Wasserkraftschnecke gut zugänglich für etwaige Wartungsarbeiten ist. Ein Kraftabtrieb über beispielsweise einen Zahnkranz am Mantelrohr würde entweder ein weiteres Lager am unteren Ende der Wasserkraftschnecke erfordern, wenn der Zahnkranz frei drehbar ist, oder der Zahnkranz müsste an der Unterseite des Mantelrohrs mit entsprechenden Lagerrollen abgestützt werden, wodurch diese wieder schwer zugänglich und schlecht zu warten sind. Am Abtrieb kann eine Übersetzung angeordnet sein, welche die Drehbewegung der Wasserkraftschnecke zu höheren Drehzahlen hin übersetzt, wie sie für einen daran angeschlossenen Generator vorteilhaft sind. Ganz allgemein kann der Riemen am Mantelrohr in einem Längsbereich angreifen, welcher im Betriebszustand nicht im Wasser ist.

Ein weiteres Merkmal der Erfindung ist es, dass mehrere das Mantelrohr von unten umschlingende Riemen zur Lagerung der Wasserkraftschnecke vorgesehen sind, wobei die Riemen in Längsrichtung der Wasserkraftschnecke in regelmäßigen Abständen angeordnet sind. Bei einem sehr langen Mantelrohr können somit über die Länge des Rohres mehrere derartige Riemen verwendet werden, wodurch das Mantelrohr gegen Biegung geschützt ist und lange, schlanke Bauweisen sinnvoll verwirklichbar sind.

Gemäß einem weiteren Merkmal der Erfindung ist es vorgesehen, dass am Mantelrohr Einrichtungen zur Führung des/der Riemen, wie beispielsweise nach außen gewölbte oder bombierte Laufflächen, Sicken oder dergleichen, vorgesehen sind. Bevorzugt werden nach außen gewölbte Laufflächen verwendet, da der Riemen im Betrieb das Bestreben hat, auf den höchsten Punkt aufzulaufen.

Ferner ist es ein Merkmal der Erfindung, dass das Mantelrohr zusätzlich gegen quer zur Längsrichtung wirkende Kräfte durch seitliche Abstützungen mit Laufrollen gesichert ist, wobei die Laufrollen in einem Abschnitt angeordnet sind, welcher im Betrieb außerhalb der Flüssigkeit liegt.. Diese, vor allem im unteren Längsbereich des Mantelrohrs angeordnete, seitliche Abstützungen mit Laufrollen verhindern ein Ausschwenken der Wasserkraftschnecke zur Seite hin.

### Kurze Beschreibung der Zeichnungsfiguren

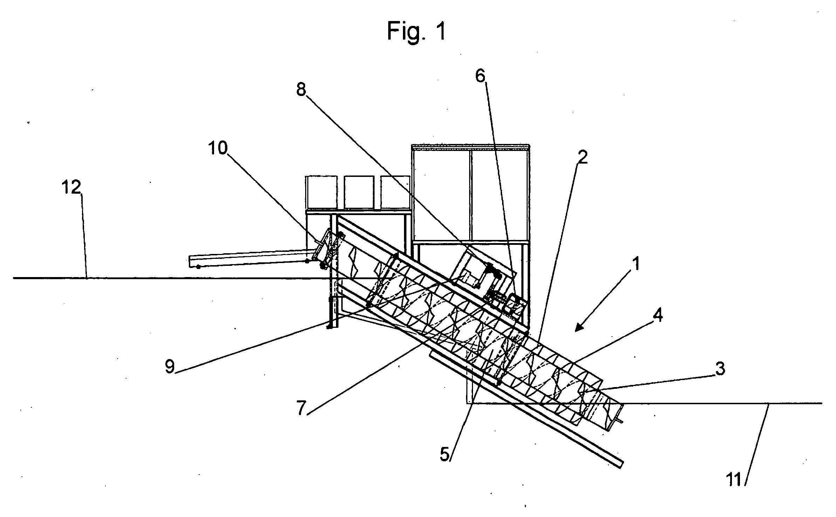

Die Erfindung wird nun anhand der beiliegenden Zeichnung näher beschrieben. Dabei zeigt die Fig. 1 einen Längsschnitt durch eine schematisch dargestellte erfindungsgemäße Wasserkraftschnecke.

### Beschreibung der Ausführungsarten

Die in Fig. 1 gezeigte Wasserkraftschnecke 1 weist eine erste Schneckenspirale auf, welche als Arbeitsschnecke 2 dient und mit dem Mantelrohr 4 fest verbunden ist. In ihrer Mitte verläuft eine zweite Schneckenspirale 3 mit entgegensetztem Wickelsinn zur Arbeitsschnecke 2. Diese zweite Schneckenspirale 3 dient als Fischleiter und ist fest mit der Arbeitsschnecke 2 verbunden, sodass sie von dieser mit angetrieben wird. Die Wasserkraftschnecke 1 ist derart gelagert, dass das obere offene Ende der ersten Schneckenspirale unterhalb eines oberen Flüssigkeitszulaufs 12 liegt. Das untere tiefer gelegene Ende der Wasserkraftschnecke 1 ist so angeordnet, dass die zweite Schneckenspirale in den tiefer gelegenen Flüssigkeitsablauf 11 hineinragt und somit Flüssigkeit vom Flüssigkeitsablauf 11 aufnimmt und nach oben transportiert. Die obere Lagerung der Wasserkraftschnecke 1 ist durch ein herkömmliches Achslager 10 realisiert. Die untere Lagerung wird durch einen das Mantelrohr 4 von unten umschlingenden Riemen 5 bewerkstelligt, welcher eine drehbare Aufhängung 6, beispielsweise eine Scheibe, von oben her umschlingt. Die Scheibe ist drehbar gelagert und ist in weiterer Folge als Kraftabtrieb 7 über ein Getriebe 8 mit einem Generator 9 verbunden. Der Riemen 6 befindet sich in einem Abschnitt der Wasserkraftschnecke 1, welcher im Betrieb nicht im Wasser ist. Alle für die Wartung wesentlichen Teile sind oberhalb der Wasserkraftschnecke angeordnet und dadurch leicht zugänglich. Bei einer besonders langen Ausführung einer Wasserkraftschnecke können weitere Riemen 6 entlang des Mantelrohres 4 angeordnet werden.

## Patentansprüche

1. Wasserkraftschnecke (1) mit einer ein- oder mehrgängigen Arbeitsschnecke, welche verbunden mit einem die Arbeitsschnecke (2) umgebenden Mantelrohr (4) zum Halten des Arbeitswassers, drehbar gelagert ist, wobei das Mantelrohr (4) einen Flüssigkeitszulauf und einen tiefer liegenden Flüssigkeitsablauf aufweist, **dadurch gekennzeichnet, dass** zumindest die tiefer liegende Lagerung der Wasserkraftschnecke (1) durch einen das Mantelrohr (4) von unten umschlingenden Riemen (5) erfolgt, welcher oberhalb des Mantelrohrs (4) eine drehbare Aufhängung (6) von oben her umschlingt, wobei diese Aufhängung (6) gleichzeitig als ein Kraftabtrieb (7) dient.

2. Wasserkraftschnecke nach Anspruch 1, **dadurch gekennzeichnet, dass** mehrere das Mantelrohr (4) von unten umschlingende Riemen (5) zur Lagerung der Wasserkraftschnecke (1) vorgesehen sind, wobei die Riemen (5) in Längsrichtung der Wasserkraftschnecke vorzugsweise in regelmäßigen Abständen angeordnet sind.

3. Wasserkraftschnecke nach Anspruch 1 oder 2, **dadurch gekennzeichnet, dass** am Mantelrohr (4) Einrichtungen zur Führung des/der Riemen (5), wie beispielsweise nach außen gewölbte oder bombierte Laufflächen, Sicken oder dergleichen, vorgesehen sind.

4. Wasserkraftschnecke nach einem der Ansprüche 1 bis 3, **dadurch gekennzeichnet, dass** das Mantelrohr (4) zusätzlich gegen quer zur Längsrichtung wirkende Kräfte durch seitliche Abstützungen mit Laufrollen gesichert ist, wobei die Laufrollen in einem Abschnitt angeordnet sind, welcher im Betrieb außerhalb der Flüssigkeit liegt.

## Claims

1. A water-power screw (1) having a single- or multi-thread working screw which, connected to a jacket pipe (4) surrounding the working screw (2) for holding the working water, is rotatably mounted, wherein the jacket pipe (4) has a fluid-inlet and a lower-lying fluid-outlet, **characterised in that** at least the lower-lying mounting of the water-power screw (1) is effected by means of a belt (5), wrapping around the jacket pipe (4) from below, which belt, above the jacket pipe (4), wraps around a rotatable suspension (6) from above, wherein this suspension (6) is simultaneously used as a power take-off (7).

2. A water-power screw according to claim 1, **characterised in that** a plurality of belts (5), wrapping around the jacket pipe (4) from below, are provided for mounting the water-power screw (1), wherein the belts (5) are preferably arranged at regular intervals in the longitudinal direction of the water-power screw.

3. A water-power screw according to claim 1 or 2, **characterised in that** provided on the jacket pipe (4) there are devices for guiding the belt/belts (5), such as, for example, outwardly curved or cambered running faces, beads or the like.

4. A water-power screw according to one of claims 1 to 3, **characterised in that** the jacket pipe (4) is additionally secured against forces acting transversely to the longitudinal direction by means of lateral supports with running rollers, wherein the running rollers are arranged in a section which during operation lies outside the fluid.

## Revendications

1. Vis hydrodynamique (1) comportant une vis de travail qui est pourvue d'un ou de plusieurs filets et qui est montée rotative dans une tube extérieur (4) entourant la vis de travail (2) et permettant de retenir l'eau de travail, le tube extérieur (4) comportant une entrée de liquide et une sortie de liquide située plus en bas, **caractérisée en ce que**, au moins à un endroit relativement bas, la vis hydrodynamique (1) est supportée par une courroie (5) qui s'enroule autour de la partie inférieure du tube extérieur (4) et qui s'enroule, au-dessus du tube extérieur (4), autour de la partie supérieure d'un dispositif de suspension (6) rotatif, le dispositif de suspension (6) servant en même temps d'élément récepteur de force (7).

2. Vis hydrodynamique selon la revendication 1, **caractérisée en ce que** la vis hydrodynamique (1) est supportée par plusieurs courroies (5) qui s'enroulent autour de la partie inférieure du tube extérieur (4), les courroies (5) étant préférentiellement disposées à distances régulières dans le sens longitudinal de ladite vis hydrodynamique.

3. Vis hydrodynamique selon les revendications 1 ou 2, **caractérisée en ce que** le tube extérieur (4) est pourvu d'organes permettant de guider la/les courroies (5), par exemple de surfaces de roulement présentant un profil bombé ou s'avançant vers l'extérieur, de nervures ou d'éléments apparentés.

4. Vis hydrodynamique selon l'une des revendications 1 à 3, **caractérisée en ce que** le tube extérieur (4) est en outre sécurisé, au moyen d'éléments d'appui latéraux comportant des roulettes, vis-à-vis de forces agissant transversalement audit sens longitudinal, lesdites roulettes étant disposées dans une partie qui lors du fonctionnement n'est pas immergée dans ledit liquide.
